**Europäisches Patentamt**

**European Patent Office**

**Office européen des brevets**

(11) Veröffentlichungsnummer : **0 402 352 B1**

(12) **EUROPÄISCHE PATENTSCHRIFT**

(45) Veröffentlichungstag der Patentschrift :
**17.03.93 Patentblatt 93/11**

(21) Anmeldenummer : **90890181.2**

(22) Anmeldetag : **08.06.90**

(51) Int. Cl.⁵ : **G01G 19/08, B65F 3/02**

(54) **Müllmengenwägesystem.**

(30) Priorität : **08.06.89 AT 1419/89**

(43) Veröffentlichungstag der Anmeldung :
**12.12.90 Patentblatt 90/50**

(45) Bekanntmachung des Hinweises auf die
Patenterteilung :
**17.03.93 Patentblatt 93/11**

(84) Benannte Vertragsstaaten :
**BE CH DE DK ES FR GB GR IT LI LU NL SE**

(56) Entgegenhaltungen :
**DD-A- 264 755**
**US-A- 4 645 018**

(73) Patentinhaber : **M-U-T**
**MASCHINEN-UMWELTTECHNIK-**
**TRANSPORTANLAGEN GESELLSCHAFT**
**M.B.H.**
**Schiessstattstrasse 49**
**A-2000 Stockerau (AT)**

(72) Erfinder : **Brosowitsch, Josef**
**Türkenstrasse 6**
**A-7083 Purbach (AT)**

(74) Vertreter : **Müllner, Erwin, Dr. et al**
**Patentanwälte Dr. Erwin Müllner Dipl.-Ing.**
**Werner Katschinka Postfach 159**
**Weihburggasse 9**
**A-1010 Wien (AT)**

EP 0 402 352 B1

## Beschreibung

Die Erfindung betrifft ein Müllmengenwägesystem, für die dynamische Verwägung des pro Müllcontainer anfallenden Müllgewichtes, vorzugsweise für die Verwendung an Fahrzeugen, wobei an der am Fahrzeug befindlichen Müllbehälterentleervorrichtung Wägezellen angeordnet sind, welche den Müllbehälter nach dessen Registrierung, z. B. mittels Barcodeleser oder induktiver bzw. kapazitiver Signalgeber, jeweils vor und nach dem Entleeren wiegen und als Gewichtsdifferenz die tatsächlich entleerte Müllmenge zu einer im Fahrerhaus angeordneten Speicher-, Rechner- und Druckerstation weiterleiten. Die Wägung erfolgt dabei während des Entleervorganges - wobei zur Ermittlung der jeweiligen Beschleunigung des Müllbehälters ein bekanntes, an einer Wiegebrücke angeordnetes Referenzgewicht zusammen mit einer eigenen Wägezelle dient, wobei bei jedem Wägevorgang, welcher in kurzen Intervallen während des Hubvorganges erfolgt, gleichzeitig die Beschleunigungskraft als elektrisches Signal weitergeleitet wird zur Berechnung der tatsächlichen Beschleunigung mit Hilfe eines Mikrochips sowie weiteren Verarbeitung der Informationen mit Hilfe eines eigenen einfachen Computerprogrammes nach den weiter unten definierten Beziehungen.

Bei Wägeeinrichtungen der genannten Art mußte bisher nach Anheben des Müllbehälters der Hubvorgang für eine bestimmte Zeit bis zum Erreichen eines Ruhesignales unterbrochen werden, wobei erst nach der Verwiegung der Entleervorgang fortgesetzt werden konnte. Nachteilig ist dabei der realtiv hohe Zeitverlust, der dann bei jeder Wiegung auftritt, und der durch das Abbremsen der Hubeinrichtung sowie äußerer Einflüsse, wie Fahrzeugneigung, Windverhältnisse u. dgl., bedingte unterschiedliche Zeitbedarf bis zum Eintreffen des Ruhesignales. Durch den Zeitverlust entsteht eine erhöhte Verkehrsbelastung sowie eine Verminderung der in der Zeiteinheit erreichbaren Sammelstrecke.

In der DE-PS 37 22 184 ist eine Vorrichtung zum Entleeren von Behältern beschrieben, bei welcher der Kraftaufnehmer der Wiegeeinrichtung an einem Element der Einschüttvorrichtung vorgesehen ist und welche weiters eine Registrier- und Rechnereinheit aufweist. Nachteilig ist dabei, daß die durch das Anheben bedingte Beschleunigung des Müllbehälters einen Fehler in der Wägung - sofern diese während des Hubvorganges erfolgt - zur Folge hat, sodaß die Wiegung immer ungenau ist und nur schwer durch Erfahrunzswerte korrigiert werden kann; hinzu kommen noch Ungenauigkeiten durch die Fahrzeugneigung, den Winddruck sowie unterschiedliche Hubgeschwindigkeiten durch die verschiedenen Einstellungen der Motordrehzahl und somit des Hydraulikölstromes.

Um nun die Nachteile der bekannten Einrichtungen zu verhindern und um ein eichfähiges System zu erhalten, wird erfindungsgemäß vorgeschlagen, den Entleervorgang ohne Unterbrechung der Hubbewegung auszuführen, wobei ein bekanntes Referenzgewicht in Verbindung mit einer eigenen Wägezelle zur laufenden Berechnung der Beschleunigung des Müllcontainers dient, wobei dieses Referenzgewicht denselben Bewegungsablauf wie der Müllcontainer ausführt, nämlich durch Anordnung an der Wiegebrücke.

Das erfindungsgemäße Müllmengenwägesystem bestehend aus einer Wägeeinrichtung mittels Wägezellen, einer Datenerfassungs- und Speichereinrichtung, einer Behälteridentifizierungsvorrichtung für die kundenspezifische Zuordnung der einzelnen Müllbehälter, wobei die Wägeeinrichtung ein Gelenkviereck aufweist, welches an einer Behälterentleereinrichtung angeordnet ist, ist somit dadurch gekennzeichnet, daß im Bereich einer Wiegebrücke eine Referenzmasse bekannter Größe gelagert ist, welche auf eine weitere Kraftmeßdose einwirkt, deren Meßwerte laufend zur Berechnung der augenblicklichen Beschleunigung der Wiegebrücke während des Entleervorganges des Müllbehälters dient, und daß die einzelnen Wägungen gleichzeitig mit der Messung der Beschleunigungskräfte der Referenzmasse erfolgen. Damit sind Fahrzeugneigungen sowie seitliche Einflüsse durch Windkräfte Witterung od. dgl. ohne Bedeutung für die Berechnung des tatsächlichen Müllgewichtes, da das Referenzgewicht denselben Bedingungen ausgesetzt ist, wie der Müllbehälter selbst.

Aus der DD-PS 264 755 ist ein Wägesystem für Fahrzeuge, insbesondere für Fischerei-Fahrzeuge bekannt, mit der eine Massebestimmung auf in Bewegung befindlichen Fahrzeugen mit optimaler Genauigkeit durchgeführt werden soll. Bei diesem bekannte Wägesystem wird eine zusätzliche, zweite Wägeeinrichtung in paralleler Anordnung benützt, wobei eine bekannte Masse einen Sensor beaufschlagt, um die Verfälschungen durch die Roll- bzw. Stampfbewegungen des Schiffes zu korrigieren. Diese parallele Anordnung, welche von der eigentlichen Waage örtlich getrennt ist, ist insofern problematisch, als aufgrund der räumlichen Entfernung der beiden Waagen auch unterschiedliche Beschleunigungen zu erwarten sind. Eine Korrektur für die erste Waage ist somit nicht gewährleistet. Bei der erfindungsgemäßen Waage wird davon ausgegangen, daß nicht das Fahrzeug in Bewegung ist, sondern eine Hubeinrichtung, die sogenannte Müllentleervorrichtung, welche sich normalerweise im Heckbereich des Fahrzeuges befindet, wobei das Fahrzeug selbstverständlich ruht, da ja sonst eine Müllentleerung gar nicht möglich wäre. Im Unterschied zum bekannten Wägesystem nach der DD-PS 264 755 befindet sich auf der erfindungsgemäßen Waage, das heißt, auf der Wiegebrücke, das eigentliche Referenzgewicht, es ist also nicht örtlich getrennt von der eigentlichen Waage, womit auch erreicht wird, daß tatsächlich alle Beschleunigungen der eigentlichen Wägeeinrichtung ident sind mit der Beschleuni-

2

gung der Referenzwaage. Das heißt, die erfindungsgemäße Waage ist ein sogenanntes "Waage im Waagesystem", das Referenzgewicht befindet sich unmittelbar auf der Brückenplatte der ersten Waage. Eine sinnvolle Problemlösung ist nur dann möglich, wenn die beiden Meßdosen auf ein- und demselben Waagebalken bzw. der Wiegebrücke angeordnet sind, um eine vollkommene Kongruenz der Bewegungen zu gewährleisten. Im übrigen ist von einer Waage gemäß der DD-PS kein lastproportionales Signal zu erwarten, da ja die Wiegeeinrichtung selbst ein Eigengewicht aufweist.

Vorzugsweise ist die Referenzmasse im Bereich der Hubeinrichtung derart vorgesehen, daß sie exakt dieselbe Bewegung wie die Wiegebrücke ausführt. Nach einem weiteren Merkmal der Erfindung sind mehrere Referenzmassen für die Aufnahme verschiedener Beschleunigungsrichtungen vorgesehen. Die Berechnung und Auswertung der einzelnen Beschleunigungskräfte der Referenzmasse und der Masse des Müllbehälters, sowie des Anteiles der Hubeinrichtung erfolgt erfindungsgemäß mittels eines im Fahrerhaus vorgesehenen Computers. Bevorzugt wird der Wiegevorgang erst nach Erfassung und Speicherung des Müllcontainercodes automatisch eingeleitet. Zweckmäßigerweise wird die Behälterentleereinrichtung automatisch gestoppt, wenn die Indentifikationseinrichtung ausfällt. Die Entleervorrichtung ist vorzugsweise mittels elektrohydraulischer Steuerventile betätigbar, wobei bei Nichterfassung eines Meßwertes automatisch der Hubvorgang unterbrochen wird. Vorzugsweise sind die Identifizierungseinrichtungen wie Laserlicht, Leseeinrichtungen, sowie induktive oder kapazitive Signalgeber an der Hub-Kippeinrichtung befestigt, wobei bei Annäherung des Behälters an die Entleereinrichtung automatisch die Identifizierung erfolgt. Zweckmäßigerweise ist im Fahrerhaus neben der Speicher- und Rechnerstation zusätzlich eine Diskettenstation sowie eine Eingabemöglichkeit für die Fahrtroute und Müllsorte vorgesehen. Bevorzugt sind die Wägezellen und das Referenzgewicht zwischen den beiden im wesentlichen senkrecht stehenden Platten der Wiegebrücke angeordnet. Nach einem weiteren Merkmal der Erfindung sind die Wägezellen mittels Gehänge mit der Wiegebrücke verbunden. Zweckmäßigerweise ist die Wiegebrücke als Zwischenglied zwischen den Hubarmen und den Behälteraufnahmearmen eingebaut. Als Wägezellen sind sowohl DMS- als auch piezoelektrische oder hydraulische Meßdosen einsetzbar, wobei diese einzelnen Systeme auch untereinander für die beiden Meßwertaufnehmer kombinierbar sind. Vorzugsweise bildet die Wiegebrücke mit den eingebauten Wägezellen und dem Referenzgewicht eine eigene Einheit, welche an jede beliebige Hub-Kippeinrichtung anbaubar ist.

Anhand der Zeichnungen wird nun ein Ausführungsbeispiel der Erfindung näher beschrieben.

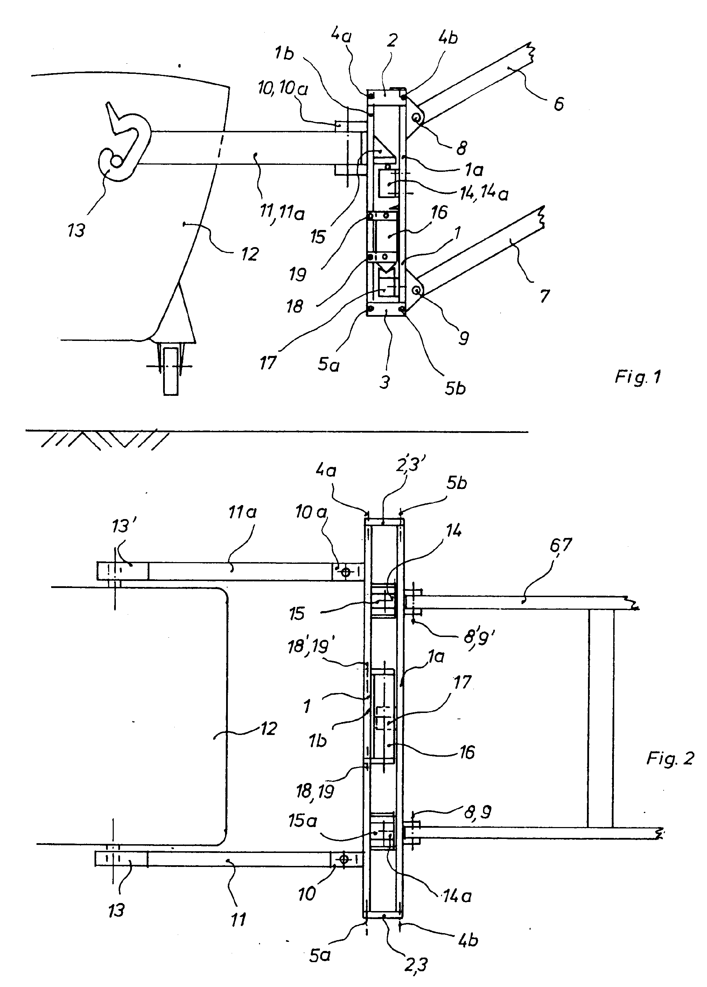

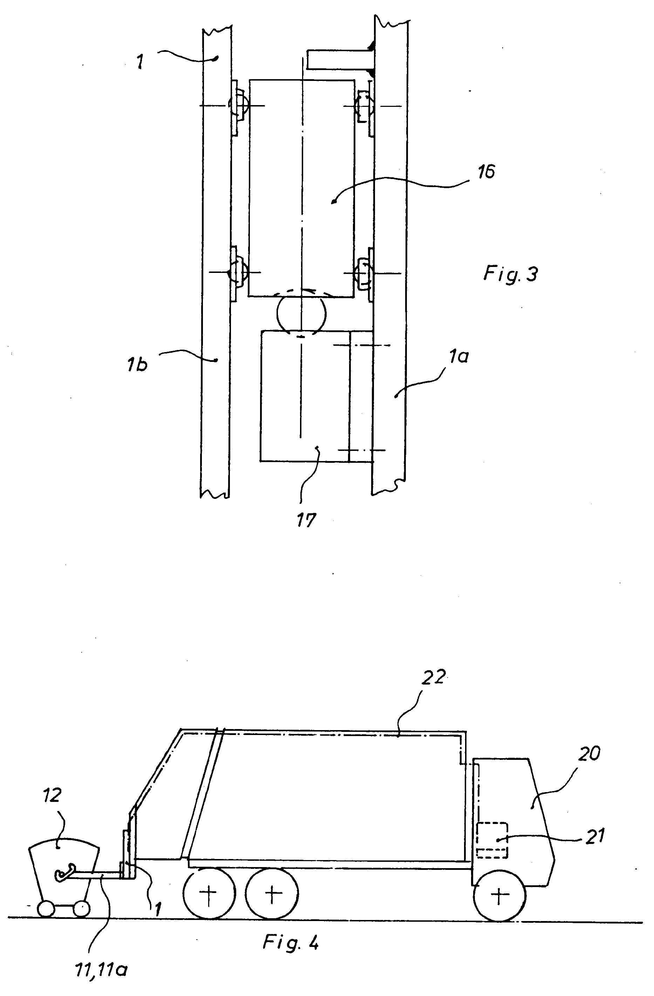

Fig. 1 zeigt eine seitliche Ansicht einer beispielsweisen Ausführung mit Wiegebrücke, Fig. 2 dieselbe Einrichtung in Draufsicht, Fig. 3 eine beispielsweise Anordnung des Referenzgewichtes und Fig. 4 ein Fahrzeug komplett mit Datenerfassungssystem.

Fig. 1 zeigt eine Wiegebrücke 1, welche aus einer Vorderplatte 1a und einer Rückplatte 1b besteht, welche ihrerseits mittels Parallellenker 2, 2', 3, 3' einen viereckigen Rahmen bilden. Die Parallellenker 2, 2', 3, 3' sind durch die Lagerstellen 4a, 4b, 5a, 5b möglichst reibungsfrei gelagert. An der vorderen Seite sind die Hubarme 6, 7 der Hub-Kippeinrichtung über die Lager 8, 8', 9, 9' mit der Wiegebrücke 1 verbunden. Heckseitig befinden sich die Hubarme 11, 11a schwenkbar über die Lagerkonsolen 10, 10a mit der Heckplatte 1b verbunden. Der Müllbehälter 12 wird von Klauen 13, 13' der Hubeinrichtung erfaßt und entleert. Zwischen den Platten 1a, 1b der Wiegebrücke 1 befinden sich Wägezellen 14, 14a, welche die vertikalen Kräfte des Müllbehälters 12 und die entsprechenden Anteile der Hub-Kippeinrichtung aufnehmen, in der Form, daß die Wägezellen 14, 14a auf der vorderen Platte 1a befestigt und die Auflageplatten 15, 15a an der hinteren Platte 1b angeordnet sind. In technischer Umkehr können die Wägezellen 14, 14a auch auf der hinteren Platte 1b und die Auflageplatten 15, 15a auf der vorderen Platte 1a angeordnet sein. Durch das Parallelogramm 1a, 1b, 2, 3 wird erreicht, daß nur vertikale Kräfte zur Wiegung gelangen.

An der Wiegebrücke 1 ebenfalls angeordnet ist das Referenzgewicht 16 mit der Wägezelle 17, welches durch die Lenker 18, 19, 18', 19' mit der Wiegebrücke 1 in Verbindung steht. Das Referenzgewicht 16 kann auch an einem anderen Ort im Bereich der Hubeinrichtung angeordnet werden, es muß nur die gleichen Bewegungen wie der Müllbehälter 12 selbst ausführen. Fig. 2 zeigt die gegenständliche Vorrichtung von oben gesehen, wobei zwei Wägezellen 14, 14a vorgesehen sind. Fig. 3 zeigt die genauere Darstellung der Anordnung des Referenzgewichtes 16, welches möglichst reibungsfrei, z. B. auch mittels Gehänge, an der Wiegebrücke 1 befestigt ist. Möglich wäre hier auch eine nur gleitende Lagerung des Referenzgewichtes 16 zwischen den Platten 1a, 1b, der Wiegebrücke 1, z. B. mittels Kugeln seitlich geführt. Fig. 4 zeigt ein Fahrzeug in Gesamtansicht, wobei im Fahrerhaus 20 die Registrier- und Rechenanlage mit Drucker 21 vorgesehen ist. Die Leitung 22 ist die Verbindung von der Wägeeinrichtung zur Rechnereinheit 21.

Der Wägevorgang, welcher vor dem Entleeren und nach dem Entleeren des Müllbehälters 12 erfolgt und durch die Bildung der Differenz das tatsächlich entleerte Müllgewicht errechnet wird, erfolgt nun dadurch, daß kurz nach Anheben des Behälters 12 mittels der Hubvorrichtung automatisch ein Steuersignal gegeben wird, worauf der Behälter 12 mehrfach hintereinander in Intervallen während des laufenden Hubvorganges gewogen, sodann entleert und dann während der Absetzbewegung im leeren Zustand wieder in Intervallen gewogen wird. Die gemessene Kraft setzt sich dann jeweils zusammen aus dem Behältergewicht und dem Anteil des Gewichtes der Entleervorrichtung, sowie der diesen Gewichten entsprechenden Massen mal deren Beschleunigung. Gleichzeitig mit jeder Wiegung wird auch die Kraft, welche aus der Beschleunigungsbewegung der Referenzmasse 16 folgt, gemessen und in einem Computerprogramm das tatsächlich entleerte Müllgewicht errechnet, wobei eine Mittelung der Werte aufgrund der mehrmaligen Wiegungen automatisch erfolgt.

Der Wägevorgang darf allerdings immer erst dann eingeleitet werden, nachdem der Behälter 12 automatisch identifiziert und registriert worden ist, mit dem Zweck, die zu entrichtenden Gebühren für die Müllabfuhr nach der Gewichtsmenge des Mülls festzulegen. Diese automatische Registrierung kann mit bereits bekannten Methoden, wie z. B. Barcodeleser (d. h. Anordnung eines großflächigen Strichcodes am Behälter) oder mittels induktiver oder kapazitiver Impulsgeber erfolgen.

Die sich ständig während des Hubvorganges ändernde Beschleunigung wird laufend mit Hilfe des bekannten Referenzgewichtes gemessen bzw. berechnet und dient aufgrund nachstehender physikalischer Zusammenhänge für die exakte und somit eichfähige Ermittlung der tatsächlich entleerten Müllgewichte:

Setzt man in der Ableitung der Programmformel für die Müllmengenmessung

$m_{M,v}$     für Masse Müllbehälter, voll in kg,

$m_{M,1}$     für Masse Müllbehälter, leer in kg,

$m_R$     für Masse des Referenzgewichtes in kg,

$a_H$     für Beschleunigung beim Heben in m/s$^2$,

$a_S$     für Beschleunigung bzw. Verzögerung beim Senken in m/s$^2$,

$m_{Sch}$     für Masse der Schüttung incl. $m_R$ in kg,

$G_{R,H}$     für Gewicht des Referenzgewichtes beim Heben in N,

$G_{R,S}$     für Gewicht des Referenzgewichtes beim Senken in N,

$G_{ges,H}$     für Gesamtgewicht beim Heben in N,

$G_{ges,S}$     für Gesamtgewicht beim Senken in N,

$G_M$     für entleertes Müllgewicht in (daN) und

$g$     für Erdbeschleunigung in m/s$^2$

dann ist     $G_{R,H} = m_R \cdot (g + a_H);$     $a_H = \dfrac{G_{R,H}}{m_R} - g$

bzw.     $G_{R,S} = m_R \cdot (g - a_S);$     $a_S = g - \dfrac{G_{R,S}}{m_R}$

Ferner ist:

$G_{ges,H} = m_{Sch} \cdot a_H + m_{M,v} \cdot (g + a_H)$ (Das Schüttungsgewicht selbst ist auf 0 tariert)

$G_{ges,S} = m_{M,1} \cdot (g - a_S) - m_{Sch} \cdot a_S$ daraus folgt

$$m_{M,v} = \frac{G_{ges,H} - m_{Sch} \cdot a_H}{g + a_H} \quad \text{und} \quad m_{M,I} = \frac{G_{ges,S} + m_{Sch} \cdot a_S}{g - a_S}$$

Die tatsächlich entleerte Müllmenge $m_{Müll} = m_{M,v} - m_{MI}$, in kg

bzw. das Müllgewicht

$$G_M = m_{Müll} \cdot g$$
$$=================$$

in daN

Damit ist nur ein Beispiel des Erfindungsgegenstandes im Rahmen des Erfindungsgedankens dargestellt worden. Beispielsweise wäre es auch möglich zwei oder mehrere Referenzgewichte 16 im Bereich der Hubeinrichtung anzuordnen und zwar auch in der Form, daß nicht nur vertikale, sondern auch beispielsweise horizontale sowie in jeder beliebigen Richtung auftretende Beschleunigungen meßbar sind, um somit eine noch exaktere Gewichtsbestimmung zu erreichen. Die Wiegebrücke 1 ist so konstruiert, daß sie für alle Schüttungen verwendet werden kann, einfach als schmales Zwischenstück zwischen den Hubarmen 6, 7 und den Adaptern 11, 11a für die Behälteraufnahme. Somit ist nur eine geringfügige Abänderung auch von bereits bestehenden Entleervorrichtungen für den Einbau dieses Wiegesystems von Nöten. Eine weitere Sicherheitsvorkehrung ist, daß der Behälter 12 erst nach dessen Registrierung verwogen werden kann und bei Störung der Registrierung der Hubvorgang automatisch unterbrochen wird. Die zusätzliche Anordnung von Wägezellen 14 bzw. der Kraftaufnehmer kann auch noch an beliebiger Stelle des Hubmechanismus vorgesehen werden und eine Integration der Meßwerte mittels Rechnerprogramm erfolgen. Die Identifizierung der Müllbehälter erfolgt automatisch, wie bereits erwähnt durch Anordnung von bekannten Erkennungselementen an der Hubeinrichtung, sowie am Müllbehälter selbst, wobei bereits bei relativ großem Abstand diese Idenfizierung möglich sein sollte.

Die im Fahrerhaus angeordnete Rechner- und Druckerstation sollte ferner auch zur Eingabe der Fahrtroute, der Müllsorte, sowie eventuell auch der Wetterbedingungen dienen.

Ferner wäre es auch möglich, zusätzlich zur normalen Drucker- und Speicherstation eine Diskettenstation vorzusehen, um nach Beendigung der Fahrtroute die gesammelten Daten an eine stationäre Anlage übertragen zu können. Neben den hauptsächlich verwendeten DMS-Wägezellen können auch piezoelektrische Aufnehmer oder hydraulische Druckmeßdosen vorgesehen sein. Die elektrischen Analogsignale werden mittels A/D-Wandler für die Verarbeitung im Computer umgewandelt. Es sei noch erwähnt, daß die Wiegebrücke 1 so konstruiert ist, daß der Abstand der Last von der Wiegebrücke 1 selbst ohne Bedeutung ist, da nur die vertikale Lastkomponente gemessenen wird und kein Drehmoment.

Schließlich sei noch bemerkt, daß die Referenzmasse 16 mit der eigenen Wägezelle 17 einen Beschleunigungsaufnehmer (Beschleunigungssensor) darstellt, welche auch als kompakter Bauteil erhältlich ist und aus einer federnd aufgehängten seismischen Masse besteht, deren Auslenkung induktiv erfaßbar ist bzw. an eigenen DMS-Wägezellen aufgehängt ist. Diese beispielsweisen induktiven Beschleunigungsaufnehmer können auch mit integrierter Elektronik ausgerüstet sein. Auch ist es möglich Winkelbeschleunigungsaufnehmer zu verwenden, welche ebenfalls eine Referenzmasse in Form eines pendelnden Gewichtes aufweisen.

## Patentansprüche

1. Müllmengenwägesystem, bestehend aus einer Wägeeinrichtung mittels Wägezellen (14,14a), einer Datenerfassungs- und Speichereinrichtung, einer Behälteridentifizierungsvorrichtung für die kundenspezifische Zuordnung der einzelnen Müllbehälter, wobei die Wägeeinrichtung ein Gelenkviereck aufweist, welches an einer Behälterentleereinrichtung angeordnet ist, dadurch gekennzeichnet, daß im Bereich einer Wiegebrücke (1) eine Referenzmasse (16) bekannter Größe gelagert ist, welche auf eine weitere Kraftmeßdose (17) einwirkt, deren Meßwerte laufend zur Berechnung der augenblicklichen Beschleunigung der Wiegebrücke (1) während des Entleervorganges des Müllbehälters dient, und daß die einzelnen Wägungen gleichzeitig mit der Messung der Beschleunigungskräfte der Referenzmasse (16) erfolgen.

2. Müllmengenwägesystem nach Anspruch 1, dadurch gekennzeichnet, daß die Referenzmasse (16) im Bereich der Hubeinrichtung derart vorgesehen ist, daß sie exakt dieselbe Bewegung wie die Wiegebrücke (1) ausführt.

3. Müllmengenwägesystem nach Anspruch 1, dadurch gekennzeichnet, daß mehrere Referenzmassen (16) für die Aufnahme verschiedener Beschleunigungsrichtungen vorgesehen sind.

4. Müllmengenwägesystem nach Anspruch 1, dadurch gekennzeichnet, daß die Berechnung und Auswertung der einzelnen Beschleunigungskräfte der Referenzmasse (16) und der Masse des Müllbehälters (12), sowie des Anteiles der Hubeinrichtung mittels eines im Fahrerhaus vorgesehenen Computers erfolgt.

5. Müllmengenwägesystem nach Anspruch 1, dadurch gekennzeichnet, daß der Wiegevorgang erst nach Erfassung und Speicherung des Müllcontainercodes automatisch eingeleitet wird.

6. Müllmengenwägesystem nach Anspruch 1, dadurch gekennzeichnet, daß die Behälterentleereinrichtung automatisch gestoppt wird, wenn die Idenfikationseinrichtung ausfällt.

7. Müllmengenwägesystem nach Anspruch 1, dadurch gekennzeichnet, daß die Entleervorrichtung mittels elektrohydraulischer Steuerventile betätigbar ist und bei Nichterfassung eines Meßwertes automatisch der Hubvorgang unterbrochen wird.

8. Müllmengenwägesystem nach Anspruch 1, dadurch gekennzeichnet, daß die Identifizierungseinrichtungen wie Laserlicht, Leseeinrichtungen, sowie induktive oder kapazitive Signalgeber an der Hub-Kippeinrichtung befestigt sind und bei Annäherung des Behälters (12) an die Entleereinrichtung automatisch die Identifizierung erfolgt.

9. Müllmengenwägesystem nach Anspruch 1, dadurch gekennzeichnet, daß im Fahrerhaus neben der Speicher- und Rechnerstation zusätzlich eine Diskettenstation sowie eine Eingabemöglichkeit für die Fahrtroute und Müllsorte vorgesehen ist.

10. Müllmengenwägesystem nach Anspruch 1, dadurch gekennzeichnet, daß die Wägezellen (14, 14a, 17) und das Referenzgewicht (16) zwischen den beiden im wesentlichen senkrecht stehenden Platten (1a, 1b) der Wiegebrücke (1) angeordnet sind.

11. Müllmengenwägesystem nach Anspruch 1, dadurch gekennzeichnet, daß die Wägezellen (14, 14a, 17) mittels Gehänge mit der Wiegebrücke (1) verbunden sind.

12. Müllmengenwägesystem nach Anspruch 1, dadurch gekennzeichnet, daß die Wiegebrücke (1) als Zwischenglied zwischen den Hubarmen (6, 7) und den Behälteraufnahmearmen (11, 11a) eingebaut ist.

13. Müllmengenwägesystem nach Anspruch 1, dadurch gekennzeichnet, daß als Wägezellen (14, 14a, 17) sowohl DMS- als auch piezoelektrische oder hydraulische Meßdosen einsetzbar sind, wobei diese einzelnen Systeme auch untereinander für die beiden Meßwertaufnahmen kombinierbar sind.

14. Müllmengenwägesystem nach Anspruch 1, dadurch gekennzeichnet, daß die Wiegebrücke (1) mit den eingebauten Wägezellen (14, 14a, 17) und dem Referenzgewicht (16) eine eigene Einheit bildet, welche an jede beliebige Hub-Kippeinrichtung anbaubar ist.

**Claims**

1. Refuse quantity weighing system consisting of a weighing device with weighing cells (14, 14a), a data acquisition and storage device, a container identification device for allocating the individual refuse containers to specific customers, in which the weighing device has a quadrilateral linkage which is arranged on a container emptying device, characterised in that within the area of a weighbridge (1) there is stored a reference mass (16) of known size which acts upon a further load cell (17) whose measuring values serve for continuously calculating the instantaneous acceleration of the weighbridge (1) during the emptying process of the refuse container, and that the individual weighing processes take place at the same time as the measuring of the acceleration forces of the reference mass (16).

2. Refuse quantity weighing system according to claim 1, characterised in that the reference mass (16) is provided within the area of the lifting device in such a way that it carries out precisely the same movement as the weighbridge (1).

3. Refuse quantity weighing system according to claim 1, characterised in that several reference masses (16) are provided for receiving different acceleration directions.

4. Refuse quantity weighing system according to claim 1, characterised in that the calculation and evaluation of the individual acceleration forces of the reference mass (16) and the mass of the refuse container (12) as well as the proportion in the lifting device is carried out by means of a computer provided in the driver's compartment.

5. Refuse quantity weighing system according to claim 1, characterised in that the weighing process is introduced automatically only after acquiring and storing the refuse container code.

6. Refuse quantity weighing system according to claim 1, characterised in that the container emptying device is automatically stopped when the identification device fails.

7. Refuse quantity weighing system according to claim 1, characterised in that the emptying device can be operated by means of electrohydraulic control valves and the lifting process is automatically interrupted when a measuring value has not been received.

8. Refuse quantity weighing system according to claim 1, characterised in that the identification devices such as laser beams, reading devices as well as inductive or capacitive signal detectors are attached to the lifting/tilting device and the identification takes place automatically as the container (12) approaches the emptying device.

9. Refuse quantity weighing system according to claim 1, characterised in that in the driver's compartment next to the memory and computer terminal there is additionally provided a diskette station as well a possibility for inputting the route to be taken and the type of refuse.

10. Refuse quantity weighing system according to claim 1, characterised in that the weighing cells (14, 14a, 17) and the reference weight (16) are arranged between the two essentially perpendicular platforms (1a, 1b) of the weighbridge (1).

11. Refuse quantity weighing system according to claim 1, characterised in that the weighing cells (14, 14a, 17) are connected to the weighbridge (1) by means of suspension gear.

12. Refuse quantity weighing system according to claim 1, characterised in that the weighbridge (1) is constructed as an intermediate element built in between the lifting arms (6, 7) and the container receiving arms (11, 11a).

13. Refuse quantity weighing system according to claim 1, characterised in that DMS as well as piezoelectric or hydraulic measuring cells can be used as the weighing cells (14, 14a, 17), wherein these individual cells together can also be combined for receiving the two measuring values.

14. Refuse quantity weighing system according to claim 1, characterised in that the weighbridge (1) forms a separate unit with the built-in weighing cells (14, 14a, 17) and the reference weight (16), which can be installed in any lifting/tilting device.

**Revendications**

1. Système de pesage de déchets ou d'ordures, se composant d'un dispositif de pesage à l'aide de cellules de pesée (14, 14a), d'un dispositif d'acquisition de données et de mise en mémoire, d'un dispositif d'identification de récipient pour l'affectation spécifique au client du récipient individuel à ordures ou à déchets, dans lequel le dispositif de pesage comporte un quadrilatère articulé qui est monté sur un dispositif de vidage de récipient, caractérisé en ce qu'une masse de référence (16), de grandeur connue, est disposée dans la zone d'un pont de mesure (1), cette masse de référence agissant sur une autre capsule de mesure de force (17), dont la valeur de mesure courante sert au calcul de l'accélération instantanée du pont de mesure (1), pendant le processus de vidage du récipient de déchets ou d'ordures, et en ce que les pesées individuelles sont réalisées simultanément à la mesure des forces d'accélération de la masse de référence (16).

2. Système de pesage de déchets ou d'ordures selon la revendication 1, caractérisé en ce que la masse de référence (16) est disposée dans la zone du dispositif de levage, de telle façon qu'elle effectue exactement le même déplacement que le pont de pesée (1).

3. Système de pesage de déchets ou d'ordures selon la revendication 1, caractérisé en ce qu'il comporte plusieurs masses de référence (16) pour capter l'accélération selon différentes directions.

4. Système de pesage de déchets ou d'ordures selon la revendication 1, caractérisé en ce que le calcul et l'analyse des forces d'accélération individuelles de la masse de référence (16) et de la masse du récipient de déchets ou d'ordures (12), ainsi que de la partie du dispositif de levage, sont réalisés à l'aide d'un ordinateur disposé dans la cabine du conducteur.

5. Système de pesage de déchets ou d'ordures selon la revendication 1, caractérisé en ce que le processus de pesage est déclenché automatiquement, immédiatement après la saisie et la mise en mémoire du code du conteneur de déchets ou d'ordures.

6. Système de pesage de déchets ou d'ordures selon la revendication 1, caractérisé en ce que le dispositif de vidage de récipient est arrêté automatiquement lorsque le dispositif d'identification est défaillant.

7. Système de pesage de déchets ou d'ordures selon la revendication 1, caractérisé en ce que le dispositif de vidage est susceptible d'être actionné par des valves de commande électro-hydrauliques et en ce que, dans le cas où l'on n'obtient pas une valeur de mesure, le processus de levage est interrompu automatiquement.

8. Système de pesage de déchets ou d'ordures selon la revendication 1, caractérisé en ce que les dispositifs d'identification tels que rayons laser, dispositifs de lecture, ainsi que des générateurs de signaux inductifs ou capacitifs sont fixés au dispositif de basculaient et de levage et réalisent automatiquement l'identification, à l'approche du récipient (12), du dispositif de vidange.

9. Système de pesage de déchets ou d'ordures selon la revendication 1, caractérisé en ce que, dans la cabine du conducteur, à côté du poste de mise en mémoire et de calcul, est prévu en outre un poste de disquettes, ainsi qu'une possibilité d'introduction manuelle de données pour le trajet de ramassage et le type d'ordures.

10. Système de pesage de déchets ou d'ordures selon la revendication 1, caractérisé en ce que les cellules de pesée (14, 14a, 17) et la masse de référence (16) sont disposées entre les deux plaques (1a, 1b) du pont de mesure (1) disposées de façon sensiblement verticale.

11. Système de pesage de déchets ou d'ordures selon la revendication 1, caractérisé en ce que les cellules de pesée (14, 14a, 17) sont reliées au pont de mesure (1) à l'aide de suspensions.

12. Système de pesage de déchets ou d'ordures selon la revendication 1, caractérisé en ce que le pont de pesée (1) est monté comme un organe intermédiaire entre les bras de levage (6, 7) et les bras de prise du récipient (11, 11a).

13. Système de pesage de déchets ou d'ordures selon la revendication 1, caractérisé en ce que l'on peut utiliser comme cellules de pesée (14, 14a, 17) aussi bien des jauges de contrainte que des capsules de mesure électriques ou hydrauliques, ces systèmes individuels étant également susceptibles d'être combinés entre eux pour réaliser les deux captages de mesure.

14. Système de pesage de déchets ou d'ordures selon la revendication 1, caractérisé en ce que le pont de pesage (1) forme une seule unité avec les cellules de pesage intégrées (14, 14a, 17) et la masse de référence (16), cette unité étant susceptible d'être rapportée à chaque dispositif particulier de basculement et de levage.

Fig. 1

Fig. 2

1

16

*Fig. 3*

1b

1a

17

22

12

20

21

1

*Fig. 4*

11,11a